# EUROPÄISCHE PATENTSCHRIFT

(11) **EP 0 486 949 B1**
(45) Veröffentlichungstag und Bekanntmachung des Hinweises auf die Patenterteilung: **28.07.1993**
(21) Anmeldenummer: 91119466.0
(22) Anmeldetag: 14.11.1991
(51) Int. Cl.: F16L 17/035

(54) **Rohrverbinder aus Muffe und Einsteckteil, insbesondere für Kunststoffrohre**
Pipe connector with socket and plug-in part, especially for plastic pipes
Raccord de tuyaux avec manchon et pièce enfichable, notamment pour tuyaux en matière plastique

(30) Priorität: 17.11.1990 DE 4036759
(43) Veröffentlichungstag der Anmeldung: 27.05.1992
(73) Patentinhaber: Dipl.-Ing. Dr. Ernst Vogelsang GmbH & Co. KG, D-45699 Herten (DE)
(72) Erfinder: Vogelsang, Horst, W-4352 Herten (DE)
(74) Vertreter: Andrejewski, Walter

(56) Entgegenhaltungen:
- EP-A- 0 283 729
- DE-A- 2 528 811
- DE-B- 1 182 913
- FR-A- 2 512 917

## Beschreibung

Die Erfindung betrifft einen Rohrverbinder aus Muffe und Einsteckteil, insbesondere für Kunststoffrohre, wobei die Muffe ein Eingangsführungsteilstück, ein Endführungsteilstück sowie eine Aufweitung aufweist, die aus einer Aufnahmerille für einen Haltering und einer Dichtungskammer für eine mit dem Haltering verbundene, im nichtgekuppelten Zustand in Einsteckrichtung trichterförmig zusammenlaufende Dichtungslippe besteht, die eine angeformte Verschlußlippe aufweist, die gegenüber der Dichtungslippe konisch erweitert ist sowie im nichtgekuppelten Zustand an der Innenwand der Dichtungskammer anliegt und wobei der Haltering auf seiner Innenseite eine umlaufende Kompressionsrippe besitzt, die zumindest zum Eingangsführungsteilstück hin mit einer Anschrägung versehen ist, die sich bis zur einschubseitigen Flanke des Halteringes als schräggeneigte Fläche fortsetzt, wobei der Haltering mit Hilfe des Einsteckteils über die Kompressionsrippe in die Aufnahmerille gedrückt ist, die ebenso wie der Haltering trapezförmigen Querschnitt aufweist, wobei ferner die Kompressionsrippe in Einschubrichtung des Einsteckteils hinter dem Mittelpunkt des trapezförmigen Querschnittes von Aufnahmerille und Haltering angeordnet ist und die einschubseitige Flanke der Aufnahmerille länger ist als die zugeordnete Flanke des Halteringes. - Rohrverbinder dieser Art sind bekannt (DE-A-28 00 406) und haben sich bewährt. Sie werden in erdverlegten Rohrleitungen eingesetzt, insbesondere bei Kabelschutzrohren oder Kabelführungsrohren. Diese Rohrverbinder sind als Zweiphasen-Rohrverbinder bekannt, weil das Dichtungsbauteil aus Haltering und Dichtungskonus eine doppelte Funktion erfüllt: Die Kompressionsrippe des Halteringes bewirkt beim Einführen des Einsteckteils zunächst eine Zentrierung des Einsteckteils. Die Dichtungslippe mit der angeformten Verschlußlippe bewirkt danach hauptsächlich die Abdichtung. Allerdings bewirkt die Kompressionsrippe, daß beim Einschieben des Einsteckteils eine verhältnismäßig große Einschubkraft aufgebracht und damit auch eine verhältnismäßig große Einschubarbeit geleistet werden muß. Das beruht darauf, daß das Dichtungsbauteil aus Haltering, Dichtungslippe und angeformter Verschlußlippe aus Gummi besteht und Gummi zwar elastisch verformbar, jedoch nicht kompressibel ist. Es versteht sich, daß die Absolutwerte der Einschubkraft und der Einschubarbeit von der Shorehärte des Gummis abhängen.

Der Erfindung liegt die Aufgabe zugrunde, einen Rohrverbinder des eingangs beschriebenen Aufbaus so weiter auszubilden, daß die beschriebene Funktion als Zweiphasen-Rohrverbinder erhalten bleibt, Einschubkraft und Einschubarbeit bei vorgegebener Shorehärte für das Dichtungsbauteil jedoch wesentlich reduziert sind.

Zur Lösung dieser Aufgabe lehrt die Erfindung, daß der Haltering eine umlaufende Kompressionsentlastungsnut aufweist, die auf der der Einschubseite gegenüberliegenden Seite offen ist und sich bis in den Querschnittsbereich erstreckt, in dem auch die Kompressionsrippe angeordnet ist, jedoch zur Einschubseite hin betrachtet vor dem Querschnittsbereich endet, daß der Bereich rohrinnenseitig unter der Kompressionsentlastungsnut als eine Verlängerung der Dichtungslippe zur Kompressionsrippe hin ausgeführt ist, und daß die Kompressionsentlastungsnut mit ihrer rohraußenseitigen Nutenfläche an die innenseitige Kante der Aufnahmerille möglichst stufenfrei anschließt. - Kompressionsentlastungsnuten sind an Dichtungsringen von Rohrverbindern an sich bekannt (DE-B- 11 82 913). Generell ist im Rahmen der Erfindung die Anordnung so getroffen, daß bei eingeführtem Einsteckteil die Flächen der Kompressionsentlastungsnut aneinanderliegen. Wichtig ist, daß die Kompressionsentlastungsnut mit ihrer außenseitigen Nutenfläche an die innenseitige Kante der Aufnahmerille möglichst stufenfrei anschließt.

Die erreichten Vorteile sind darin zu sehen, daß die eingangs beschriebene Zweiphasen-Funktion bei dem erfindungsgemäßen Rohrverbinder nach wie vor verwirklicht ist. Die Kompressionsrippe drückt den Haltering in die beschriebene Aufnahmerille und bewirkt unter dem Einfluß der Einschubkraft und der Kompression im eingeschobenen Zustand des Einsteckteils eine sehr genaue Positionierung des Halteringes in der zugeordneten Aufnahmekammer, Das ist überraschend, da an sich wegen der Kompressionsentlastungsnut eine Störung dieser Verhältnisse, die als Gleichgewichts-verhältnisse anzusehen sind, zu besorgen ist. Obgleich die Einschubkraft reduziert ist, bleibt die Dichtungsfunktion ungestört. Das gilt insbesondere dann, wenn die Dichtungslippe und die Verschlußlippe ihrerseits noch mit umlaufenden Rippen versehen sind. Jedenfalls funktioniert die Verschlußlippe nach wie vor auch dahingehend, daß verhindert wird, daß Verunreinigungen zwischen Dichtungslippe und Verschlußlippe und den gegenüberliegenden Wandteilen der Muffe oder aber in die Kompressionsentlastungsnut eindringen,

Nach bevorzugter Ausführungsform der Erfindung endet die Kompressionsentlastungsnut zur Einschubseite hin vor dem Querschnittsbereich der Kompressionsrippe mit einem bogenförmigen Nutengrund. Zweckmäßigerweise weist die Kompressionsentlastungsnut einen zum Nutengrund hin keilförmig verengten Querschnitt auf.

Bei Rohrverbindern des beschriebenen Aufbaus ist es an sich bekannt (DE-C- 36 44 834) die Dichtungslippe einschließlich der Verschlußlippe als Doppellippe auszuführen, wobei die beiden Einzellippen durch einen Spaltraum getrennt sind. Nach einer bevorzugten Ausführungsform der Erfindung ist auch im Rahmen der Erfindung die Anordnung so getroffen, daß die Dichtungslippe einschließlich der Verschlußlippe als Doppellippe ausgeführt ist, wobei die Einzellippen durch einen Spaltraum getrennt sind, und daß der Spaltraum, entgegen der Einschubrichtung betrachtet, bis in den Bereich des Beginns der Kompressionsentlastungsnut geführt ist. In dem letztgenannten Merkmal liegt eine Abstimmung zwischen der Kompressionsentlastungsnut und dem Spaltraum, die sich im Sinne der Zweiphasen-Funktion vorteilhaft auswirkt. Das gilt insbesondere dann, wenn in bezug auf die Selbsthemmung besondere Verhältnisse verwirklicht sind, die im Zusammenhang mit den Zeichnungen erläutert werden.

Im folgenden wird die Erfindung anhand einer lediglich ein Ausführungsbeispiel darstellenden Zeichnung ausführlicher erläutert. Es zeigen in schematischer Darstellung
- Fig. 1: einen Längsschnitt durch einen erfindungsgemäßen Rohrverbinder, im Oberteil der Fig. 1 bei nicht eingeschobenem Einsteckteil, im Unterteil der Fig. 1 bei eingeschobenem Einsteckteil,
- Fig. 2: in gegenüber der Fig. 1 wesentlich vergrößertem Maßstab den Querschnitt durch das Dichtungsbauteil der Fig. 1 mit Haltering, Dichtungslippe und Verschlußlippe,
- Fig. 3: entsprechend der Fig. 2 das Dichtungsbauteil einer anderen Ausführungsform eines erfindungsgemäßen Rohrverbinders, und
- Fig. 4: entsprechend der Fig. 1 einen Schnitt durch einen erfindungsgemäßen Rohrverbinder, ausschnittsweise, mit dem Dichtungsbauteil der Fig. 3.

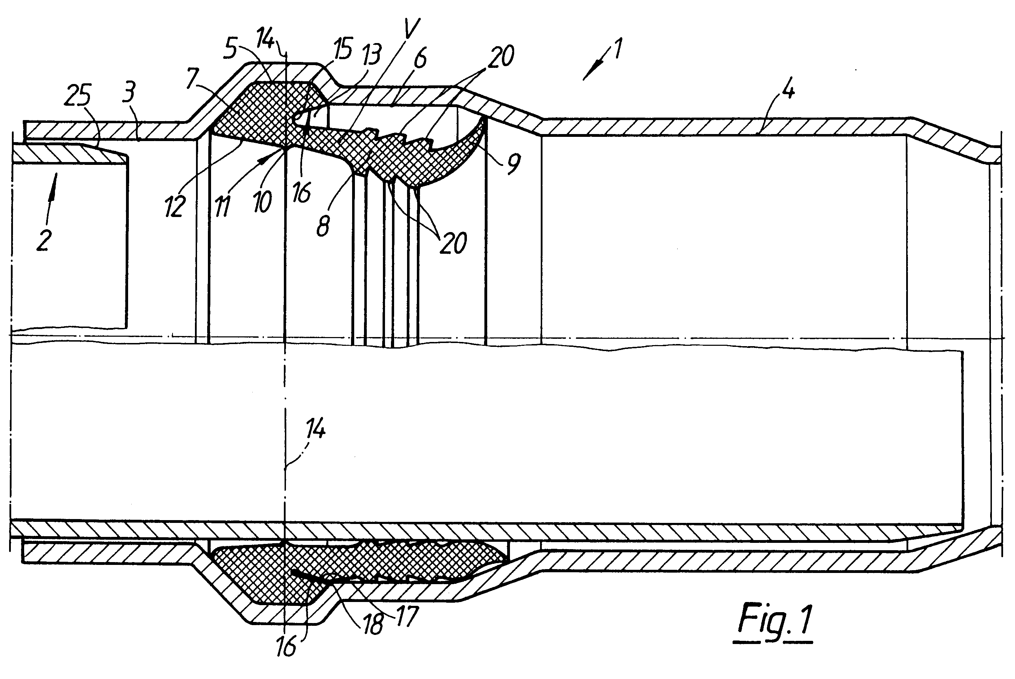

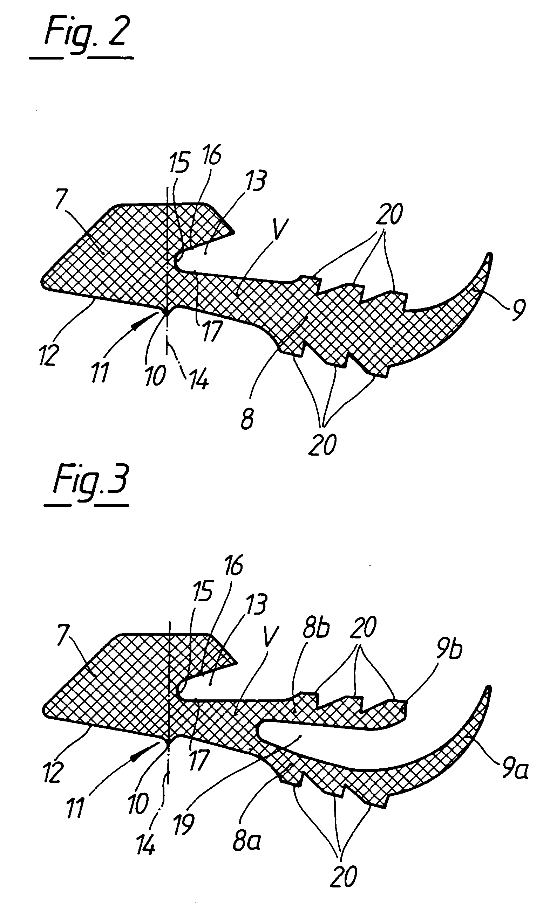

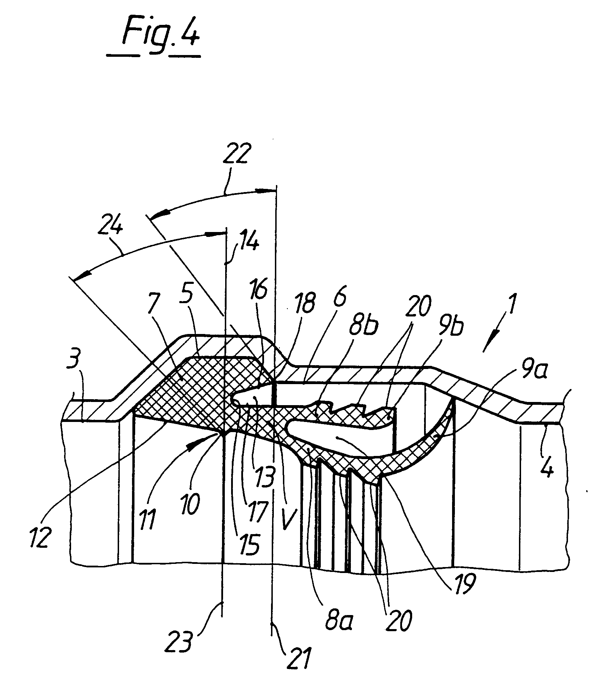

Der in den Figuren dargestellte Rohrverbinder besteht aus Muffe 1 und Einsteckteil 2. Insbesondere mag es sich um Kunststoffrohre handeln, wobei Muffe 1 und Einsteckteil 2 angeformt sind. Die Muffe 1 besitzt ein Eingangsführungsteilstück 3, ein Endführungsteilstück 4 sowie eine Aufweitung 5, 6, die aus einer Aufnahmerille 5 für einen Haltering 7 und einer Dichtungskammer 6 für eine mit dem Haltering 7 verbundene, im nichtgekuppelten Zustand in Einsteckrichtung trichterförmig zusammenlaufende Dichtungslippe 8 besteht, die eine angeformte Verschlußlippe 9 aufweist, die gegenüber der Dichtungslippe 8 konisch erweitert ist und im nichtgekuppelten Zustand an der Innenwand der Dichtungskammer 6 anliegt. Insoweit wird auf die Fig. 1 und 2 verwiesen. Die Fig. 3 und 4 stellen eine Abwandlung dar. Diese Anordnung ist so getroffen, daß der Haltering 7 auf seiner Innenseite eine umlaufende Kompressionsrippe 10 besitzt, die zumindest zum Eingangsführungsteilstück 3 hin mit einer Anschrägung 11 versehen ist. Die Anschrägung 11 setzt sich bis zur einschubseitigen Flanke des Halteringes 7 als schräggeneigte Fläche 12 fort. Der Haltering 7 ist mit Hilfe des Einsteckteils 2 über die Kompressionsrippe 10 in die Aufnahmerille 5 gedrückt, wie die Fig. 1 im Unterteil zeigt. Die Aufnahmerille 5 weist ebenso wie der Haltering 7 trapezförmigen Querschnitt auf. Die Kompressionsrippe 10 befindet sich in Einschubrichtung des Einsteckteils 2 hinter dem Mittelpunkt des trapezförmigen Querschnittes von Aufnahmerille 5 und Haltering 7. Die einschubseitige Flanke der Aufnahmerille 5 ist länger als die zugeordnete Flanke des Halteringes 7.

Aus einer vergleichenden Betrachtung der Fig. 1 bis 4 entnimmt man, daß der Haltering 7 stets eine umlaufende Kompressionsentlastungsnut 13 besitzt. Die Kompressionsentlastungsnut 13 ist auf der der Einschubseite gegenüberliegenden Seite offen und erstreckt sich bis in den Querschnittsbereich, in dem auch die Kompressionsrippe 10 angeordnet ist. Dieser Querschnittsbereich ist in den Figuren durch eine besondere radiale Linie 14 angedeutet. Der Bereich unter der Kompressionsentlastungsnut 13 ist als eine Verlängerung der Dichtungslippe 8 zur Kompressionsrippe 10 hin ausgeführt. Darunter wird verstanden, daß die Dichtungslippe 8 frei von Zwängen und Stufen verlängert ist. Betrachtet man die beschriebene Linie 14, die den Querschnittsbereich der Kompressionsrippe 10 angibt, so erkennt man, daß die Kompressionsentlastungsnut 13 zur Einschubseite hin vor dem Querschnittsbereich der Kompressionsrippe 10 mit einem bogenförmigen Nutengrund 15 endet. Die Kompressionsentlastungsnut 13 besitzt einen zum Nutengrund 15 hin keilförmig verengten Querschnitt. Im Unterteil der Fig. 1 erkennt man, daß bei eingeführtem Einsteckteil 2 die Flächen 16, 17 der Kompressionsentlastungsnut 13 aneinanderliegen. Das kann auch mit einer gewissen Kompression oder Vorspannung geschehen. Im übrigen schließt im Ausführungsbeispiel und nach bevorzugter Ausführungsform der Erfindung die Kompressionsentlastungsnut 13 einerseits an die Verlängerung V der Dichtungslippe 8 und andererseits mit ihrer außenseitigen Nutenfläche 16 an die innenseitige Kante 18 der Aufnahmerille 5 möglichst stufenfrei an.

Von besonderer Bedeutung ist die Ausführungsform nach den Fig. 3 und 4. Man erkennt hier, daß die Dichtungslippe 8 einschließlich der Verschlußlippe 9 als Doppellippe ausgeführt ist, was durch die Kennzeichnungen a und b deutlich gemacht wurde, wobei die beiden Einzellippen durch einen Spaltraum 19 getrennt sind, und daß der Spaltraum 19 entgegen der Einschubrichtung betrachtet, bis in den Bereich des Beginns der Kompressionsentlastungsnut 13 geführt ist. In allen Fällen besitzen im Ausführungsbeispiel die Dichtungslippe 8 und die daran angeschlossene Verschlußlippe 9 zusätzlich umlaufende Dichtungsrippen 20. Betrachtet man die Fig. 4, so erkennt man, daß dort besondere Winkel eingezeichnet sind. Die der Einschubseite gegenüberliegende Flanke der Aufnahmerille 5 sowie die zugeordnete Fläche am Haltering 7 bilden in bezug auf einen Rohrverbinderradius 21 einen Winkel 22, der gleich oder kleiner ist als 45° sowie Selbsthemmung bewirkt. Im übrigen erkennt man einen auf einen Rohrverbinderradius 23 bezogenen Winkel 24 der Kompressionsrippe 10, der beim Einschieben des Einsteckendes 2 mit dessen Kegelfläche 25 in Kontakt kommt und größer ist als der Winkel der Selbsthemmung, so daß zwar bei dem erstgenannten Winkel 22 Selbsthemmung eintritt, an diesem letztgenannten Winkel 24 jedoch nicht. Das bewirkt eine weitere Reduzierung der Einschubkräfte.

## Patentansprüche

1. Rohrverbinder aus Muffe (1) und Einsteckteil (2), insbesondere für Kunststoffrohre, wobei die Muffe (1) ein Eingangsführungsteilstück (3), ein Endführungsteilstück (4) sowie eine Aufweitung (5, 6) aufweist, die aus einer Aufnahmerille (5) für einen Haltering (7) und einer Dichtungs-kammer (6) für eine mit dem Haltering (7) verbundene, im nichtgekuppelten Zustand in Einsteckrichtung trichterförmig zusammenlaufende Dichtungslippe (8) besteht, die eine angeformte Verschlußlippe (9) aufweist, die gegenüber der Dichtungslippe (8) konisch erweitert ist sowie im nichtgekuppelten Zustand an der Innenwand der Dichtungskammer (6) anliegt und wobei der Haltering (7) auf seiner Innenseite eine umlaufende Kompressionsrippe (10) besitzt, die zumindest zum Eingangsführungsteilstück (3) hin mit einer Anschrägung (11) versehen ist, die sich bis zur einschubseitigen Flanke des Halteringes (7) als schräggeneigte Fläche (12) fortsetzt, wobei der Haltering (7) mit Hilfe des Einsteckteils (2) über die Kompressionsrippe (10) in die Aufnahmerille (5) gedrückt ist, die ebenso wie der Haltering (7) trapezförmigen Querschnitt aufweist, wobei ferner die Kompressionsrippe (10) in Einschubrichtung des Einsteckteils (2) hinter dem Mittelpunkt des trapezförmigen Querschnittes von Aufnahmerille (5) und Haltering (7) angeordnet ist und die einschubseitige Flanke der Aufnahmerille (5) länger ist als die zugeordnete Flanke des Halteringes (7), **dadurch gekennzeichnet**, daß der Haltering (7) eine umlaufende Kompressionsentlastungsnut (13) aufweist,
die auf die Einschubseite gegenüberliegenden Seite offen ist und sich bis in den Querschnittsbereich (14) erstreckt, in dem auch die Kompressionsrippe (10) angeordnet ist, jedoch zur Einschubseite hin betrachtet vor dem Querschnittsbereich (14) endet,
daß der Bereich rohrinnenseitig unter der Kompressionsentlastungsnut (13) als eine Verlängerung (V) der Dichtungslippe (8) zur Kompressionsrippe (10) hin ausgeführt ist, und daß die Kompressionsentlastungsnut (13) mit ihrer rohraußenseitigen Nutenfläche (16) an die innenseitige Kante (18) der Aufnahmerille (5) möglichst stufenfrei anschließt.

2. Rohrverbinder nach Anspruch 1, dadurch gekennzeichnet, daß die Kompressionsentlastungsnut (13) zur Einschubseite hin vor dem Querschnittsbereich (14) der Kompressionsrippe (10) mit einem bogenförmigen Nutengrund (15) endet.

3. Rohrverbinder nach einem der Ansprüche 1 oder 2, dadurch gekennzeichnet, daß die Kompressionsentlastungsnut (13) einen zum Nutengrund (15) hin keilförmig verengten Querschnitt aufweist.

4. Rohrverbinder nach einem der Ansprüche 1 bis 3, dadurch gekennzeichnet, daß die Dichtungslippe (9) einschließlich der Verschlußlippe als Doppellippe (9a, 9b) ausgeführt ist, wobei die beiden Einzellippen (9a, 9b) durch einen Spaltraum (19) getrennt sind und daß der Spaltraum (19) entgegen der Einschubrichtung bis in den Bereich des Beginns der Kompressionsentlastungsnut (13) geführt ist.

## Claims

1. A pipe joint comprising a sleeve (1) and an insertion part (2), particularly for plastic pipes, wherein the sleeve (1) has an insertion guide section (3), an end guide section (4), and a socket (5, 6) which consists of a seating groove (5) for a retaining ring (7) and a seal housing (6) for a sealing lip (8) which is attached to the retaining ring (7), which sealing ring in the uncoupled state converges in the direction of insertion in the shape of a funnel, and which has a locking lip (9) formed on it which is enlarged conically in relation to the sealing lip (8) and in the uncoupled state is seated against the inner wall of the seal housing (6), and wherein the retaining ring (7) has a compression rib (10) running round its inside face, which compression rib is provided with an oblique portion (11) at least in the direction of the insertion guide section (3), which oblique portion continues as an obliquely sloping surface (12) towards the insertion-side flank of the retaining ring (7), wherein the retaining ring (7) is pushed via the compression rib (10) into the seating groove (5) by means of the insertion part (2), which insertion part has a trapezoidal cross-section just like the retaining ring (7), wherein in addition the compression rib (10) is disposed behind the mid-point of the trapezoidal cross-section of the seating groove (5) and the retaining ring (7) in the direction of insertion of the insertion part (2), and the insertion-side flank of the seating groove (5) is longer than the associated flank of the retaining ring (7), characterised in that the retaining ring (7) has a compression relief groove (13) running round it, which is open on the side opposite the insertion side and which extends towards the cross-section region (14) in which the compression rib (10) is also disposed, but terminates before the cross-section region (14) as viewed in the direction of the insertion side, that the region towards the inside of the pipe below the compression relief groove (13) is constructed as an extension (V) of the sealing lip (8) towards the compression rib (10), and that the groove face (16) of the compression relief groove (13) which is nearer to the outside of the pipe is seated against the inside flank (18) of the seating groove (5) as free from discontinuities as possible.

2. A pipe joint according to claim 1, characterised in that the compression relief groove (13) terminates towards the insertion side with an arc-shaped groove base (15) in front of the cross-section region (14) of the compression rib (10).

3. A pipe joint according to one of claims 1 or 2, characterised in that the compression relief groove (13) has a cross-section which narrows in the shape of a wedge towards the groove base (15).

4. A pipe joint according to any one of claims 1 to 3, characterised in that the sealing lip (9) is constructed as a double lip (9a, 9b) which includes the locking lip, wherein the two individual lips (9a, 9b) are separated by a three-dimensional gap (19) and that the three-dimensional gap (19) is led opposite to the direction of insertion towards the region where the compression relief groove (13) begins.

## Revendications

1. Raccord pour tuyaux constitué par un manchon (1) et une partie enfichable (2), notamment pour des tuyaux en matière plastique, dans lequel le manchon (1) possède une pièce de guidage d'introduction (3), une pièce de guidage d'extrémité (4) ainsi qu'une partie élargie (5,6), qui est constituée par une rainure de logement (5) pour une bague de retenue (7) et une chambre d'étanchéité (6) pour une lèvre d'étanchéité (8), qui est raccordée à la bague de retenue (16), et, à l'état non accouplé, se termine en forme d'entonnoir dans la direction d'enfichage et sur laquelle est conformée une lèvre de fermeture (9) qui s'étend avec une forme conique par rapport à la lèvre d'étanchéité (8) et, à l'état non accouplé, s'applique contre la paroi intérieure de la chambre d'étanchéité (6), et dans lequel la bague de retenue (7) possède, sur sa face intérieure, une nervure circonférentielle de compression (10), qui est pourvue, au moins en direction de la pièce de guidage d'introduction (3), d'un biseau (11), qui se prolonge jusqu'au flanc, situé sur le côté d'insertion, de la bague de retenue (7) sous la forme d'une surface oblique (12), et dans lequel la bague de retenue (7) est repoussée, au moyen de la partie enfichable (2), par l'intermédiaire de la nervure de compression (10), dans la rainure de logement (5), qui possède, comme la bague de retenue (7), une section transversale trapézoïdale, et dans lequel en outre la nervure de compression (10) est disposée, dans la direction d'insertion de la partie enfichable (2), en arrière du point central de la section transversale de forme trapézoïdale de la rainure de logement (5) et de la bague de retenue (7), et le flanc, situé du côté insertion, de la rainure de logement (5) est plus long que le flanc associé de la bague de retenue (7), caractérisé en ce que la bague de retenue (7) possède une gorge circonférentielle de détente de compression (13), qui est ouverte sur le côté situé à l'opposé du côté d'introduction et s'étend jusque dans la zone (14) de la section transversale, dans laquelle est également disposée la nervure de compression (10), mais se termine, en direction du côté d'introduction, en avant de la zone (14) de la section transversale,
que la partie située sur le côté intérieur du tube au-dessous de la gorge de détente de compression (13) est réalisée sous la forme d'un prolongement (V) de la lèvre d'étanchéité (8) en direction de la nervure de compression (10), et que la gorge de détente de compression (13) se raccorde autant que possible d'une manière progressive, par sa surface (16) située du côté de l'extérieur du tube, au bord (18), situé sur le côté intérieur, de la rainure de logement (5).

2. Raccord pour tuyaux selon la revendication 1, caractérisé en ce que la gorge de détente de compression (13) se termine, en direction du côté d'introduction, en avant de la zone (14) de la section transversale de la nervure de compression (10), par un fond (15) de forme arquée.

3. Raccord pour tuyaux selon l'une des revendications 1 ou 2, caractérisé en ce que la gorge de détente de compression (13) possède une section transversale qui se rétrécit avec une forme en coin en direction du fond (15) de la gorge.

4. Raccord pour tuyaux selon l'une des revendications 1 à 3, caractérisé en ce que la lèvre d'étanchéité (9) est réalisée, y compris la lèvre de fermeture, sous la forme d'une lèvre double (9a,9b), les deux lèvres individuelles (9a,9b) étant séparées par une fente (19), et que la fente (19) s'étend, en sens opposé de la direction d'introduction, jusque dans la zone du début de la gorge de détente de compression (13).
